# EUROPÄISCHE PATENTSCHRIFT

(11) **EP 0 901 331 B1**
(45) Veröffentlichungstag und Bekanntmachung des Hinweises auf die Patenterteilung: **17.07.2002**
(21) Anmeldenummer: 97920625.7
(22) Anmeldetag: 08.04.1997
(51) Int. Cl.: A47B 63/06, B65G 1/127

(54) **KOMBINATION EINER LAGERVORRICHTUNG MIT EINER SICHERHEITSEINRICHTUNG**
COMBINED STORAGE AND SAFETY DEVICE
COMBINAISON D'UN DISPOSITIF DE STOCKAGE AVEC UN SYSTEME DE SECURITE

(30) Priorität: 08.04.1996 DE 29606381 U
(43) Veröffentlichungstag der Anmeldung: 17.03.1999
(73) Patentinhaber: Megamat GmbH Büro + Lagertechnik, 86476 Neuburg (DE)
(72) Erfinder: KATZENSCHWANZ, Bernhard, D-86381 Krumbach (DE)
(74) Vertreter: Fiener, Josef
(86) Internationale Anmeldenummer: EP9701739
(87) Internationale Veröffentlichungsnummer: WO9737564

(56) Entgegenhaltungen:
- EP-A- 0 254 088
- EP-A- 0 383 257
- DE-A- 3 514 932
- DE-A- 3 631 602
- DE-A- 3 714 638
- DE-A- 4 201 991
- DE-A- 4 342 083
- PATENT ABSTRACTS OF JAPAN vol. 016, no. 376 (M-1294), 12.August 1992 & JP 04 121303 A (DAIFUKU CO LTD), 22.April 1992,

## Beschreibung

Die Erfindung betrifft eine Kombination einer Lagervorrichtung mit einer Sicherheitseinrichtung gemäß den oberbegrifflichen Merkmalen des Anspruchs 1.

Eine derartige Kombination einer Lagervorrichtung mit einer Sicherheitseinrichtung ist aus der EP-A-0 254 088 bekannt, wobei es sich um einen sog. Paternasterschrank (Umlaufregal) mit umlaufenden Lagergutträgern handelt. In der FR -A-2.210.271 ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden rechten bzw. linken Stapelsäulen ist eine Zubringerplattform in Höhenrichtung verfahrbar, so daß einzelne Lagergutträger aus dem Regalrahmen entnommen werden können und zur Auslagerung einer Öffnung zugeführt werden können. Das Herausziehen der einzelnen kassettenartigen Lagergutträger erfolgt dabei mit einem Magneten, der an die Vorderseite der Lagergutträger ankoppelbar ist. Da jedoch dieser Entnahmemagnet eine bestimmte Baulänge aufweist, um die die seitliche Breitenerstreckung der Zubringerplattform verlängert werden muß, finden für derartige Vorrichtungen zum Ein- und Auslagern von Lastträgern in ein Regal bzw. aus einem Regal zunehmend kompaktere Kettenantriebe Verwendung, wie sie beispielsweise in der DE 42 33 690 oder der DE 38 30 218 beschrieben sind. Hierbei sind als Antriebsstränge zwei parallel zueinander angeordnete Ketten vorgesehen, die um Umlenkräder umlaufen und dabei mittels bolzenförmiger Mitnehmer in den jeweils angewählten Lagergutträger seitlich eingreifen.

Bei dem erstgenannten Stand der Technik wird die Ein-/Auslageröffnung durch mehrere Lichtschranken abgesichert, um hierbei einen Eingriff in den Bewegungsraum der höhenverfahrbaren Zubringerplattform zu verhindern bzw. bei Eingriff den Antrieb sofort stillzusetzen, um Verletzungen der Bedienperson zu vermeiden. Aus dem Bereich der Umlaufschränke (Paternosterschränke) sind zudem an der Ober- und/oder Unterkante der Ein-/Auslageröffnung Kontakt- oder Schaltleisten bekannt, die bei kräftiger Berührung den Antrieb sofort stillsetzen.

Obwohl sich beide Arten der Schutzvorrichtung grundsätzlich als Sicherheitseinrichtung bewährt haben, ist insbesondere bei den Lichtschranken nachteilig, daß viele Bedienpersonen bei ankommendem Lagergut den Stillstand der Zubringerplattform nicht abwarten, sondern in die Ein-/Auslageröffnung hineingreifen, so daß übermäßig viele "Not-Stops" auftreten. Dies gilt auch bei einem dem mechanischen Schrank vorgelagerten Entnahme- bzw. Einlagerungstisch.

Demzufolge liegt der Erfindung die Aufgabe zugrunde, eine Kombination einer Lagervorrichtung mit einer Sicherheitseinrichtung zu schaffen, mit der ein optimaler Sicherheitsstandard erreicht wird, jedoch ein unnötiges Ansprechen weitgehend vermieden wird.

Diese Aufgabe wird gelöst durch eine Kombination einer Lagervorrichtung mit einer Sicherheitseinrichtung gemäß den Merkmalen des Anspruches 1.

Durch die zusätzlich an den Seitenbereichen der Ein-/Auslageröffnung angeordneten Abdeckungen für Antriebselemente, wie Kettentriebe, wird auch der ansonsten seitlich freibleibende Eingriffsraum vollständig abgedeckt, so daß ein Kontakt einer Bedienperson mit Antriebselementen ausgeschlossen ist, insbesondere ein Quetschen an umlaufenden Ketten oder Umlenkrädern oder an der Zubringerplattform bei deren Vertikalbewegung. Da zudem die Bewegung der jeweiligen Abdeckung mit der Ein-/Auslagerbewegung der Lagergutträger gekoppelt ist, wird erreicht, daß für die Abdeckungen kein zusätzlicher Antrieb erforderlich ist, sondern diese Abdeckungen gemeinsam mit der Ein-/Auslagerbewegung betätigt werden. Von besonderem Vorteil ist die Anwendung dieser Sicherheitseinrichtung in Lagervorrichtungen mit einer vertikal beweglichen Zubringerplattform, die gegenüber der Regalfront vertieft in der Lagervorrichtung angeordnet ist. Hierdurch wird an der Ein-/Auslageröffnung ein Bereich geschaffen, an dem die Bedienperson gefahrlos hantieren kann, während der gefährliche, weiter innen liegende Bereich optimal abgesichert ist, insbesondere auch durch die obere, stationär angeordnete Schaltleiste und die untere, mit der Zubringerplattform mitbewegliche Schaltleiste.

Weitere vorteilhafte Ausgestaltungen sind Gegenstand der abhängigen Ansprüche.

Nachfolgend wird ein Ausführungsbeispiel der Kombination einer Lagervorrichtung mit einer Sicherheitseinrichtung anhand der Zeichnung näher erläutert und beschrieben. Hierbei zeigen:
- Fig. 1: eine Perspektivdarstellung einer Lagervorrichtung;
- Fig. 2: eine Schnittdarstellung der Lagereinrichtung gemäß Fig. 1; und
- Fig. 3: eine vergrößerte Darstellung einer beweglichen Abdeckung.

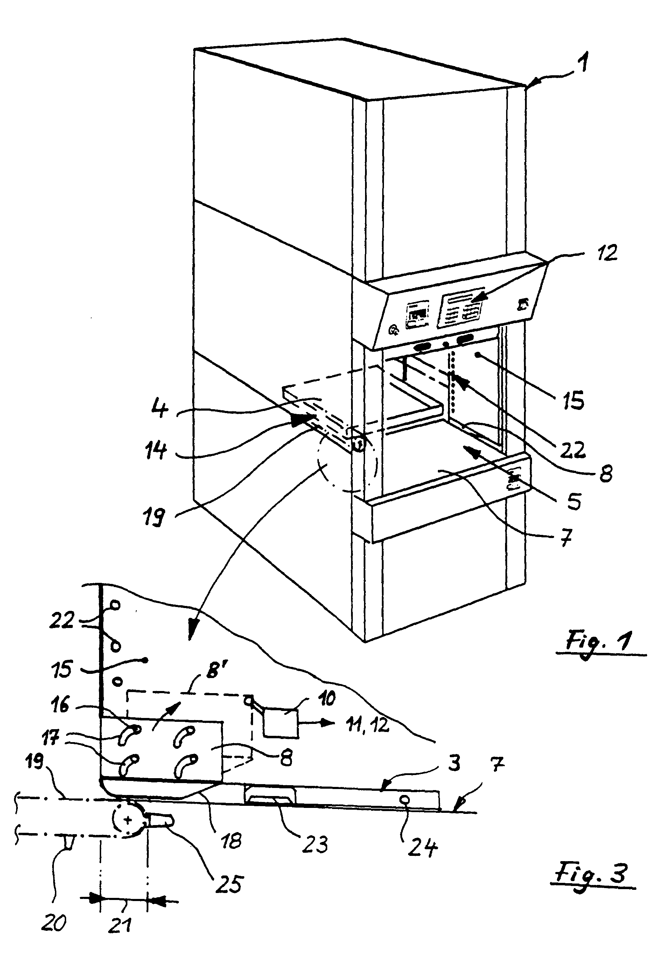

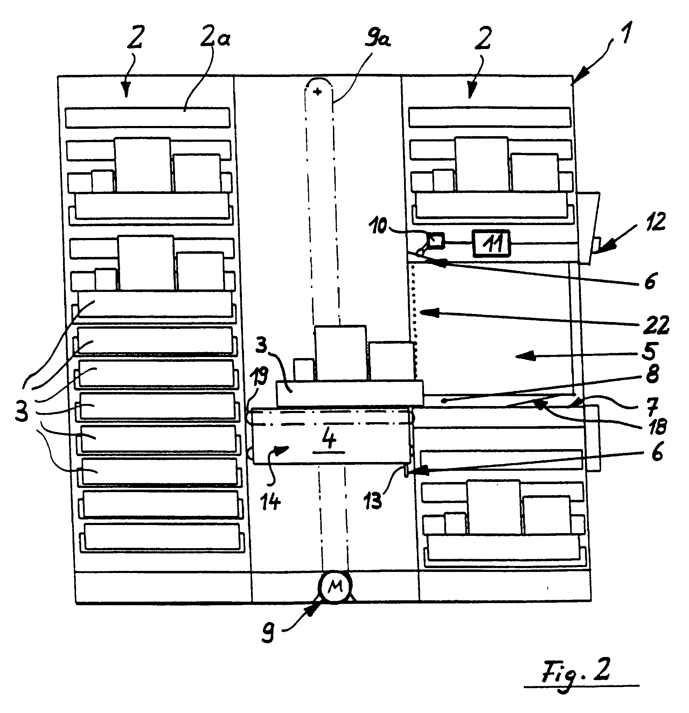

In Fig. 1 ist eine Perspektivdarstellung einer Lagervorrichtung 1 in Form eines mechanischen Schrankes gezeigt, der im wesentlichen aus zwei hintereinander angeordneten Regalrahmen 2 besteht (vgl. auch Fig. 2), in denen eine Vielzahl von flachen Lagergutträgern 3 auf seitlichen Auflagewinkeln 2a einlagerbar sind. Die Lagergutträger 3 werden hierbei durch eine Zubringerplattform 4 von einer Ein-/Auslageröffnung 5 abgeholt und zu dem jeweiligen Fach in dem Regalrahmen 2 transportiert. Die Auslagerung erfolgt dabei in umgekehrter Weise, indem der jeweilige Lagergutträger 3 von den entsprechenden Auflagewinkeln 2a an einen vorbestimmten Platz des Regalrahmens 2 gezogen wird, von der Zubringerplattform 4 dann auf die Ein-/Auslagerebene 7 der Ein-/Auslageröffnung 5 bewegt wird und dann in diese ausgeschoben wird. Die Steuerung der Einlagerung bzw. Auslagerung erfolgt dabei prozessorgesteuert mittels eines hier schematisch dargestellten Bedienfeldes 12, mit dem bestimmte Fachplätze in dem Regalrahmen 2 angewählt werden können. In der Ein-/Auslageröffnung 5 kann dabei auch ein Höhensensor 22 vorgesehen sein, der die Höhe des einzulagernden Lagergutträgers 3 erfaßt und diesem dann einen entsprechenden Platz zuweist. Hierdurch ist eine hohe Variabilität und Lagerplatznutzung in der Lagervorrichtung 1 gegeben.

Der Höhensensor 22 ist dabei durch einen sog. Lichtvorhang gebildet, der aus einer Vielzahl von gleichmäßig angeordneten Lichtschranken an den Seitenwänden 15 der Ein-/Auslageröffnung 5 gebildet ist. Oberhalb dieses Höhensensors 22, also somit an der Oberkante der Ein-/Auslageröffnung 5, ist eine Schutzvorrichtung 6 in Form einer Schaltleiste vorgesehen, die bei Betätigung, beispielsweise durch Eingriff der Hand einer Bedienperson oder durch umfallendes Lagergut, den Antrieb 9 für die Zubringerplattform 4 stillsetzt. Diese Schutzvorrichtung 6 ist hierbei in üblicher Weise mit einem Sicherheitsschalter 10 gekoppelt, der einerseits mit einem Steuerteil 11 zum sofortigen Stop und ggfs. einer Reversierbewegung verbunden ist. Diese Schutzvorrichtung 6 kann auch mittels einer Lichtschranke gebildet sein, insbesondere auch deshalb, da durch die vertiefte Anordnung gegenüber dem Stand der Technik eine übermäßig häufige Betätigung nicht zu erwarten ist. Eine prinzipiell gleich aufgebaute Schutzvorrichtung 6 ist an der Unterseite der höhenbeweglichen Zubringerplattform 4 in Form einer Schaltleiste 13 angeordnet. Diese zur Ein-/Auslageröffnung 5 hin gelegene Schaltleiste 13 kann dabei ebenfalls mit einem weiteren Sicherheitsschalter 10 und dem Steuerteil 11 verbunden sein. Die Schaltleiste 13 dient somit als Sicherheitseinrichtung bei Bewegung der Zubringerplattform 4 von oben her an die Ein-/Auslagerebene 7. Zum sofortigen Stop des Antriebes 9 können geeignete Bremsen oder nicht näher dargestellte Sperrklinken an dem Antrieb 9 oder zugeordneten Antriebsteilen, wie der Antriebskette 9a, zur Höhenbewegung der Zubringerplattform 4 vorgesehen sein.

Zur Ein-/Auslagerung der jeweiligen Lagergutträger 3 sind an den Seitenkanten 14 der Zubringerplattform 4 Kettenantriebe 19 vorgesehen, mit denen die jeweiligen Lagergutträger 3 aus der Einlageröffnung 5 übernommen werden können bzw. auf diese ausgeschoben werden können. Um hierbei mit dem auf der Ein-/Auslagerebene 7 abgestellten jeweiligen Lagergutträger 3 in Eingriff gehen zu können (vgl. Fig. 3), ist ein seitlicher Überlappungsbereich 21 der Kettenantriebe 19 mit dem Regalrahmen 2 erforderlich. Dieser Bereich ist beim Stand der Technik freibleibend und bildet somit eine Gefahrenquelle für die Bedienperson. Neuerungsgemäß ist nunmehr dieser Seitenbereich am unteren Ende der Seitenwände 15 der Ein-/Auslageröffnung 5 in Höhe der Ein-/Auslagerebene 7 von seitlichen Abdeckungen 8 überdeckt. Diese Abdeckungen 8 sind beweglich gelagert, so daß sie gemeinsam mit der Ein-/Auslagerbewegung der Lagergutträger 3 bewegbar sind und dabei ebenfalls mit Sicherheitsschaltern 10 zur Stillsetzung des Antriebes 9 gekoppelt sind.

In Fig. 2 ist eine Schnittdarstellung der Lagereinrichtung 1 gemäß Fig. 1 dargestellt, wobei insbesondere die Anordnung der beiden Regalrahmen 2 und die Zubringerplattform 4 ersichtlich sind. Weiterhin ist hieraus die Gestaltung der Abdeckung 8 ersichtlich, nämlich zur Ein-/Auslageröffnung 5 hin mit einer Schräge 18, so daß beim Einschieben eines Lagergutträgers 3 von Hand, mittels Roboter oder eines sonstigen Regalbediengerätes, die Abdeckung 8 in Vertikal- und/oder Horizontalrichtung bewegbar ist und bei dieser Ausweichbewegung den zugeordneten Sicherheitsschalter 10 zum Stillsetzen des Antriebes betätigt.

Wie vergrößert in Fig. 3 dargestellt, ist hierbei die Abdeckung 8 an einer Kulissenführung 17 an der Außenseite jeder Seitenwand 15 beweglich gelagert. Bei dem hier auf der Ein-/Auslagerebene 7 angedeuteten Lagergutträger 3 ist an der jeweiligen Seitenkante ein grifförmiges Eingriffsprofil 23 angeordnet, das beim weiteren Einschieben auf der Ein-/Auslagerebene 7 mit der Schräge 18 der Abdeckung 8 in Berührung kommt. Dadurch wird die Abdeckung 8 an der Kulissenführung 17 bzw. den an den Seitenwänden 15 angeordneten Bolzen 16 nach oben geschoben (Position 8') und gelangt damit in Kontakt mit einem Sicherheitsschalter 10. Dieser Sicherheitsschalter 10 ist ebenso wie bei der Schutzvorrichtung 6 mit dem (oder einem gesonderten) Steuerteil 11 zur Stillsetzung des Antriebes 9 gekoppelt. Unter der angehobenen Abdeckung 8 kann somit der Lagergutträger 3 bis in den Überlappungsbereich 21 mit dem Kettenantrieb 19 gebracht werden, so daß dieser nach Betätigung mit einem oder mehreren Mitnehmerelementen 20 in das Eingriffsprofil 23 der Lagergutträger 3 eingreifen kann. Dabei ist der Vertikalantrieb der Zubringerplattform 4 gesperrt.

Die Auslagerung erfolgt ebenfalls durch Antrieb der Kettenantriebe 19, wobei die Mitnehmerelemente 20 wieder außer Eingriff gelangen. Im Falle dieser Auslagerung wird die Abdeckung 8 ebenfalls durch den Lagergutträger 3 angehoben, jedoch ebenso wie bei der Einlagerung erst, wenn der seitliche Bereich durch den Lagergutträger 3 bereits so weit abgedeckt ist, daß ein Eingriff der Bedienperson in die Kettenantriebe 19 oder deren Mitnehmerelemente 20 nicht mehr möglich ist. Auch hierbei ist der Vertikalantrieb für die Zubringerplattform 4 gesperrt. Die Betätigung der

Abdeckungen 8 in Vertikal- und/oder Horizontalrichtung kann auch durch Kontakt bzw. Eingriff von seitlich abstehenden Bolzen 24 an den Lagergutträgern 3 oder durch abkragende Betätigungshebel 25 an den Kettenantrieben 19 erfolgen, die jeweils bei jeder Ein-/Auslagerbewegung der Lagergutträger 3 wirksam sind.

Insgesamt ergibt sich somit eine Kombination einer Lagervorrichtung mit einer Sicherheitseinrichtung mit einem optimalen Sicherheitsstandard, wobei jedoch ein unnötiges Ansprechen, wie dies bei vorgeschalteten "Lichtvorhängen" häufig der Fall ist, weitgehend vermieden wird und somit ein zuverlässiger Betrieb des mechanischen Schrankes bei Ein-/Auslagerung erreicht wird.

## Patentansprüche

1. Kombination einer Lagervorrichtung (1) mit einer Sicherheitseinrichtung, wobei die Lagervorrichtung (1) in Form eines mechanischen Schrankes mit einer Vielzahl von Lagergutträgern (3) ausgebildet ist, die von einem Antrieb (9) selektiv zu einer Ein-/Auslageröffnung (5) bewegbar sind, wobei eine Ober- und/oder Unterkante der Ein-/Auslageröffnung (5) durch eine Schutzvorrichtung (6), insbesondere eine Lichtschranke oder eine Schaltleiste, unter Stillsetzung des Antriebes (9) bei Eingriff abgesichert ist, **dadurch gekennzeichnet, daß** zusätzlich zu der die Ein-/Auslageröffnung (5) in Höhenrichtung absichernden Schutzvorrichtung (6) an den Seitenbereichen der Ein-/Auslagerebene (7) der Ein-/Auslageröffnung (5) bewegliche Abdeckungen (8) angeordnet sind, die gemeinsam mit der Ein-/Auslagerbewegung der Lagergutträger (3) bewegbar sind, wobei die Abdeckungen (8) Antriebselemente (9, 19, 20) abdecken und mit Sicherheitsschaltern (10) zur Stillsetzung des Antriebes (9) gekoppelt sind.

2. Kombination nach Anspruch 1, **dadurch gekennzeichnet, daß** die Lagervorrichtung (1) durch zwei Regalrahmen (2) gebildet ist, zwischen denen eine Zubringerplattform (4) vertikal beweglich ist.

3. Kombination nach Anspruch 1 oder 2, **dadurch gekennzeichnet, daß** die Ein-/Auslageröffnung (5) in einem der Regalrahmen (2) angeordnet ist.

4. Kombination nach einem der Ansprüche 1 bis 3, **dadurch gekennzeichnet, daß** die Ein-/Auslageröffnung (5) auf Körperhöhe angeordnet ist.

5. Kombination nach einem der Ansprüche 2 bis 4, **dadurch gekennzeichnet, daß** der Antrieb (9) Ketten- oder Riemenantriebe (19) aufweist, die an Seitenkanten (14) der Zubringerplattform (4) angeordnet sind und Mitnehmerelemente (20) aufweisen.

6. Kombination nach Anspruch 5, **dadurch gekennzeichnet, daß** die Abdeckungen (8) den Überlappungsbereich (21) der Mitnehmerelemente (20) mit den Lagergutträgern (3) überdecken.

7. Kombination nach einem der Ansprüche 1 bis 6, **dadurch gekennzeichnet, daß** die Abdeckung (8) in Vertikalrichtung beweglich geführt ist.

8. Kombination nach einem der Ansprüche 1 bis 6, **dadurch gekennzeichnet, daß** die Abdeckung (8) in Horizontalrichtung beweglich geführt ist.

9. Kombination nach Anspruch 7 oder 8, **dadurch gekennzeichnet, daß** die Abdeckung (8) an einer Kulissenführung (17) gelagert ist.

10. Kombination nach einem der Ansprüche 1 bis 9, **dadurch gekennzeichnet, daß** die Abdeckung (8) zur Ein-/Auslageröffnung (5) hin eine Schräge (18) aufweist.

11. Kombination nach einem der Ansprüche 1 bis 10, **dadurch gekennzeichnet, daß** eine Schutzvorrichtung (6) in Form einer Schaltleiste (13) an der zur Ein-/Auslageröffnung (5) hin gelegenen Unterkante der Zubringerplattform (4) angeordnet ist.

## Claims

1. A combination of a storage device (1) with a safety device, wherein the storage device (1) is formed in the shape of a mechanical cabinet with a plurality of stored goods carriers (3), which can be moved by a drive (9) selectively to a stocking/un-stocking opening (5), wherein an upper and/or a lower edge of the stocking/unstocking opening (5) is protected by a protective device (6), especially a light barrier or a switch rail stopping the drive (9) on intervention,
**characterized in that**
in addition to the protective device (6) protecting the stocking/un-stocking opening (5) in the height direction, movable covers (8) are arranged at the side regions of the stocking/un-stocking plane (7) of the stocking/un-stocking opening (5), which are movable together with the stocking/un-stocking movement of the stored goods carriers (3), wherein the covers (8) cover driving elements (9, 19, 20) and are coupled to safety switches (10) for stopping the drive (9).

2. A combination according to claim 1, **characterized in that** the storage device (1) is formed by two racks (2), between which a feed platform (4) is movable vertically.

3. A combination according to claim 1 or 2, **characterized in that** the stocking/un-stocking opening (5) is arranged in one of the racks (2).

4. A combination according to any of claims 1 to 3,
**characterized in that** the stocking/un-stocking opening (5) is disposed at body height.

5. A combination according to any of claims 2 to 4,
**characterized in that** the drive (9) comprises chain or belt drives (19), which are arranged at side edges (14) of the feed platform (4) and comprise entraining elements (20).

6. A combination according to claim 5, **characterized in that** the covers (8) cover the region of overlap (21) of the entraining elements (20) with the stored goods carriers (3).

7. A combination according to any of claims 1 to 6,
**characterized in that** the cover (8) is guided for movement in the vertical direction.

8. A combination according to any of claims 1 to 6,
**characterized in that** the cover (8) is guided for movement in the horizontal direction.

9. A combination according to claim 7 or 8, **characterized in that** the cover (8) is mounted on a slide guide (17).

10. A combination according to any of claims 1 to 9,
**characterized in that** the cover (8) has an incline (18) towards the stocking/un-stocking opening (5).

11. A combination according to any of claims 1 to 10,
**characterized in that** a protective device (6) in the form of a switch rail (13) is arranged on the lower edge of the feed platform (4) adjacent the stocking/unstocking opening (5).

## Revendications

1. Combinaison d'un dispositif de stockage (1) et d'un dispositif de sécurité, sachant que le dispositif de stockage (1) est réalisé sous la forme d'une armoire mécanique comportant de nombreux supports d'articles stockés (3) pouvant être déplacés de façon sélective par un dispositif d'entraînement (9) vers une ouverture de stockage/déstockage (5), sachant qu'une arête supérieure et/ou inférieure de l'ouverture de stockage/déstockage (5) est protégée par un dispositif de protection (6), notamment une barrière lumineuse ou un listel de coupure, qui coupe le dispositif d'entraînement (9) en cas d'intrusion, **caractérisée en ce qu'**en plus du dispositif de protection (6) protégeant l'ouverture de stockage/déstockage (5) dans le sens de la hauteur, des recouvrements mobiles (8) sont disposés sur les côtés du plan de stockage/déstockage (7) de l'ouverture de stockage/déstockage (5), qui peuvent accompagner le déplacement de stockage/déstockage des supports des articles stockés (3), sachant que les recouvrements (8) recouvrent des éléments d'entraînement (9, 19, 20), et qui sont couplés à des interrupteurs de sécurité (10) pour couper le dispositif d'entraînement (9).

2. Combinaison selon la revendication 1, **caractérisée en ce que** le dispositif de stockage (1) est formé par deux cadres de rayonnages (2) entre lesquels une plate-forme d'amenée (4) se déplace verticalement.

3. Combinaison selon la revendication 1 ou 2, **caractérisée en ce que** l'ouverture de stockage/déstockage (5) est placée dans l'un des cadres de rayonnages (2).

4. Combinaison selon l'une des revendications 1 à 3, **caractérisée en ce que** l'ouverture de stockage/déstockage (5) est située à hauteur d'homme.

5. Combinaison selon l'une des revendications 2 à 4, **caractérisée en ce que** le dispositif d'entraînement (9) présente des transmissions par chaîne ou par courroie (19) qui sont disposées sur les arêtes latérales de la plate-forme d'amenée (4) et sont munies de tocs d'entraînement (20).

6. Combinaison selon la revendication 5, **caractérisée en ce que** les recouvrements (8) recouvrent la zone (21) où les tocs d'entraînement (20) et les supports des articles stockés (3) se chevauchent.

7. Combinaison selon l'une des revendications 1 à 6, **caractérisée en ce que** le recouvrement (8) est guidé de façon à être mobile verticalement.

8. Combinaison selon l'une des revendications 1 à 6, **caractérisée en ce que** le recouvrement (8) est guidé de façon à être mobile horizontalement.

9. Combinaison selon la revendication 7 ou 8, **caractérisée en ce que** le recouvrement (8) est monté sur un guide de coulisse (17).

10. Combinaison selon l'une des revendications 1 à 9, **caractérisée en ce que** le recouvrement (8) présente une rampe (18) en direction de l'ouverture de stockage/déstockage (5).

11. Combinaison selon l'une des revendications 1 à 10, **caractérisée en ce qu'**un dispositif de protection (6) ayant la forme d'un listel de coupure (13) est disposé sur l'arête inférieure de la plate-forme d'amenée (4) qui est située vers l'ouverture de stockage/déstockage (5).
